# EUROPÄISCHE PATENTANMELDUNG

(11) **EP 1 199 813 A2**
(43) Veröffentlichungstag der Anmeldung: **24.04.2002**
(21) Anmeldenummer: 01440335.6
(22) Anmeldetag: 08.10.2001
(51) Int. Cl.: H04B 1/707

(54) **Basisstation eines funkbetriebenen Kommunikationssystems**

(30) Priorität: 20.10.2000 DE 10052392
(71) Anmelder: ALCATEL, 75008 Paris (FR)
(72) Erfinder: Lange, Keld, 75443 Otisheim (DE); Blanke, Gero, 71711 Murr (DE)
(74) Vertreter: Dreiss, Fuhlendorf, Steimle & Becker

(57) **Zusammenfassung**

Es wird eine Basisstation (10) eines funkbetriebenen Telekommunikationssystems beschrieben, die mit einem Empfänger zur Verarbeitung von empfangenen Informationen (11) und mit mindestens einem digitalen Signalprozessor (12) zur Durchführung eines Symbol Rate Processing (14) versehen ist. Der Signalprozessor (12) ist dazu geeignet und vorgesehen, zumindest Teile eines Chip Rate Processing (13) ebenfalls durchzuführen.

## Beschreibung

Die Erfindung geht aus von einer Basisstation oder einer Mobilstation eines funkbetriebenen Telekommunikationssystems mit einem Empfänger zur Verarbeitung von empfangenen Informationen und mit mindestens einem digitalen Prozessor, insbesondere einem digitalen Signalprozessor zur Durchführung eines Symbol Rate Processing. Die Erfindung betrifft ebenfalls ein Verfahren zum Betreiben eines funkbetriebenen Telekommunikationssystems, bei dem von einer Basisstation oder einer Mobilstation empfangene Informationen mittels mindestens eines digitalen Prozessors, insbesondere eines digitalen Signalprozessors einem Symbol Rate Processing unterzogen werden.

In einem funkbetriebenen Telekommunikationssystem werden Daten und/oder Sprache in beide Richtungen zwischen einer Basisstation und einer Mobilstation übertragen. Zum Empfangen der übertragenen Informationen z.B. in der Basisstation ist es erforderlich, ein sogenanntes Chip Rate Processing (Chipraten Verarbeitung) und ein sogenanntes Symbol Rate Processing (Symbolraten Verarbeitung) durchzuführen. Der Aufwand für das Chip Rate Processing ist im Wesentlichen abhängig von der Anzahl der vorhandenen Benutzer. Der Aufwand für das Symbol Rate Processing ist im Wesentlichen abhängig von der vorhandenen Datenrate.

Das Chip Rate Processing wird bekannterweise mit Hilfe von sogenannten Field Programmable Gate Arrays (FPGAs) oder Application Specific Integrated Circuits (ASICs) durchgeführt, während für das Symbol Rate Processing üblicherweise sogenannte digitale Signalprozessoren (DSPs) verwendet werden. Es versteht sich, dass anstelle der DSPs auch sonstige digitale Prozessoren, insbesondere Mikroprozessoren, verwendet werden können. Die Anzahl der FPGAs und/oder ASICs muss dabei derart gewählt werden, dass das Chip Rate Processing auch noch bei der maximal möglichen Anzahl von Benutzern durchführbar ist. Entsprechend muss die Anzahl der DSPs derart gewählt werden, dass das Symbol Rate Processing auch noch bei der maximal möglichen Datenrate durchführbar ist.

Es ist nun aber so, dass entweder eine maximale Anzahl von Benutzern mit einer geringen Datenrate vorhanden ist, oder aber eine geringe Anzahl von Benutzern mit einer maximalen Datenrate. Die maximale Datenrate und die maximale Anzahl von Benutzern kann jedoch niemals gleichzeitig vorhanden sein.

Dies hat zur Folge, dass die Basisstation einerseits im Hinblick auf die Anzahl der FPGAs und ASICs und die Anszahl der DSPs jeweils auf die beschriebenen Maximalfälle ausgerüstet sein muss, andererseits diese Maximalfälle aber niemals gleichzeitig auftreten können. Damit ist entweder ein Teil der FPGAs oder ASICs oder ein Teil der DSPs immer unbenutzt, was gleichbedeutend damit ist, dass die Basisstation insoweit überdimensioniert ist.

Aufgabe der Erfindung ist es, ein funkbetriebenes Telekommunikationssystem zu schaffen, das nicht oder zumindest in einem geringeren Ausmaß überdimensioniert ist.

Diese Aufgabe wird bei einer Basisstation oder einer Mobilstation der eingangs genannten Art erfindungsgemäß dadurch gelöst, dass der Signalprozessor dazu geeignet und vorgesehen ist, zumindest Teile eines Chip Rate Processing ebenfalls durchzuführen.

Bei einem Verfahren der eingangs genannten Art wird die Aufgabe erfindungsgemäß dadurch gelöst, dass von dem mindestens einen Signalprozessor zumindest ein Teil des Chip Rate Processing ebenfalls durchgeführt wird.

Erfindungsgemäß werden also ein oder mehrere Signalprozessoren vorgesehen, die beide Funktionen, also das Chip Rate Processing und das Symbol Rate Processing durchführen. Es sind also keine separaten FPGAs oder ASICs mehr wie beim Stand der Technik vorhanden, mit denen das Chip Rate Processing vollständig durchgeführt wird. Diese bisherige Aufgabe der FPGAs und ASICs wird erfindungsgemäß zumindest im Wesentlichen von dem mindestens einen Signalprozessor übernommen, der für das Symbol Rate Processing vorgesehen ist.

Daraus ergibt sich der wesentliche Vorteil, dass mit ein- und demselben Signalprozessor beide Funktionen weitgehend ausgeführt werden können. Die Bauteil- und damit Kostenersparnis ist offensichtlich.

Weiterhin ist es bei der Erfindung möglich, die Überdimensionierung z.B. der Basisstation wesentlich zu verringern oder gar völlig auszuschließen. Werden mehrere Signalprozessoren für die Durchführung der Erfindung verwendet, so besteht die Möglichkeit, dass bei bestimmten Betriebsbedingungen nicht alle Signalprozessoren zur Durchführung des Chip Rate Processing und des Symbol Rate Processing notwendig wären. Im Vergleich zum Stand der Technik ist jedoch auch in diesem Fall aufgrund der nichtvorhandenen FPGAs und ASICs eine Verminderung der Überdimensionierung vorhanden. Wird für die Durchführung der Erfindung nur ein einziger Signalprozessor verwendet, so stellt dieser eine Signalprozessor das Bauteileminimum dar, so dass gar keine Überdimensionierung mehr vorhanden ist.

Bei einer besonders vorteilhaften Ausgestaltung der Erfindung wird von dem mindestens einen Signalprozessor zuerst das Chip Rate Processing und dann das Symbol Rate Processing durchgeführt. Ebenfalls ist es bei einem Feld oder einer Gruppe von Signalprozessoren möglich, das Chip Rate Processing und das Symbol Rate Processing auf Unterfelder oder Untergruppen von Signalprozessoren zu verteilen.

Bei einer vorteilhaften Weiterbildung der Erfindung ist der Signalprozessor dazu geeignet, eine Task Allocation (Kontrollfunktion, Zuordnung von Aufgaben) zur Steuerung des Chip Rate Processing und des Symbol Rate Processing durchzuführen. Damit kann der mindestens eine Signalprozessor die Umschaltung zwischen dem Chip Rate Processing und dem Symbol Rate Processing selbst steuern. Bei dem Feld von Signalprozessoren können diese selbst ihre Aufteilung auf das Chip Rate Processing und das Symbol Rate Processing ermitteln.

Bei einer weiteren vorteilhaften Ausgestaltung der Erfindung ist mindestens ein Speicher vorhanden, der dazu geeignet und vorgesehen ist, die empfangenen Informationen zwischenzuspeichern. Dies kann insbesondere bei einem Umschalten des mindestens einen Signalprozessors zwischen dem Chip Rate Processing und dem Symbol Rate Processing erforderlich sein.

Die Erfindung betrifft ebenfalls einen Empfänger für eine Basisstation oder eine Mobilstation eines funkbetriebenen Telekommunikationssystems zur Verarbeitung von empfangenen Informationen mit mindestens einem digitalen Signalprozessor zur Durchführung eines Symbol Rate Processing, wobei der Signalprozessor dazu geeignet und vorgesehen ist, zumindest Teile eines Chip Rate Processing ebenfalls durchzuführen.

Weiterhin wird die Erfindung in der Form eines funkbetriebenen Telekommunikationssystems angewendet, bei dem eine Basisstation oder eine Mobilstation oder ein Empfänger gemäß der vorliegenden Erfindung vorhanden ist. Besonders zweckmäßig ist es dabei, wenn es sich um ein Code Division Multiple Access (CDMA) Telekommunikationssystem handelt.

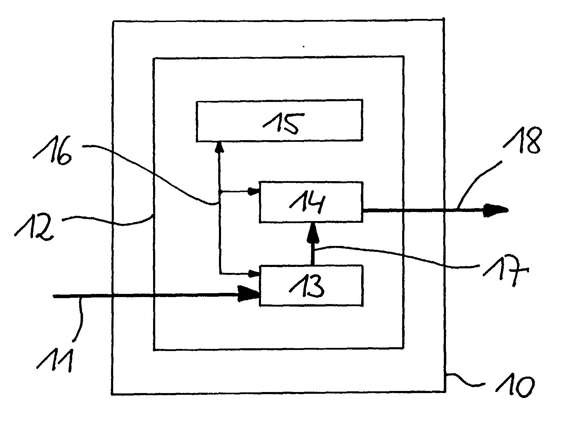

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels einer erfindungsgemäßen Basisstation eines funkbetriebenen Telekommunikationssystems.

In einem zellularen CDMA Telekommunikationssystem (CDMA = Code Division Multiple Access) steht eine Mobilstation mit einer Basisstation über Funk in Verbindung. Über diese Verbindung werden Daten und/oder Sprache in beide Richtungen übertragen. Bei Datenübertragungen kann es sich beispielsweise um Zugriffe auf das Internet oder um die Versendung von Emails handeln. Derartige Datenübertragungen erfordern eine hohe Datenrate. Im Vergleich dazu ist für die Übertragung von Sprache eine nur geringe Datenrate erforderlich. Die Daten und die Sprache, die zwischen der Basisstation und der Mobilstation übertragen werden, werden nachfolgend zusammengefasst als Informationen bezeichnet.

Aufgrund der verwendeten Funkverbindung ist die gesamte, für die Übertragung der Informationen vorhandene Datenrate begrenzt. Dies hat zur Folge, dass die Funkverbindung im Bereich zwischen zwei Extremfällen belegt sein kann. Bei den beiden Extremfällen handelt es sich einerseits um eine maximale Anzahl von Benutzern mit einer geringen Datenrate, wie dies insbesondere bei Sprachübertragungen der Fall ist, und andererseits um eine geringe Anzahl von Benutzern mit einer maximalen Datenrate, wie dies insbesondere bei Datenübertragungen der Fall ist.

Zum Empfangen der übertragenen Informationen ist es erforderlich, ein sogenanntes Chip Rate Processing (Chipraten Verarbeitung) und ein sogenanntes Symbol Rate Processing (Symbolraten Verarbeitung) durchzuführen. Bei dem Chip Rate Processing wird im Wesentlichen ein sogenanntes Despreading (Entspreizen, Wiedergewinnung der ursprünglichen Informationen) durchgeführt, das bei dem vorliegenden CDMA Telekommunikationssystem dazu verwendet wird, die übertragenen Informationen der verschiedenen Benutzer im Empfänger wieder aufzutrennen und den verschiedenen Benutzern zuzuordnen. Dieses Despreading und das Chip Rate Processing werden mit Hilfe von logischen Funktionen durchgeführt. Bei dem Symbol Rate Processing handelt es sich im Wesentlichen um das Dekodieren der empfangenen Informationen. Hierzu werden verschiedene Algorithmen verwendet, die auch arithmetische Funktionen enthalten.

Der Aufwand für das Chip Rate Processing ist im Wesentlichen abhängig von der Anzahl der vorhandenen Benutzer. Je mehr Benutzer vorhanden sind, desto mehr Aufwand ist bei dem Chip Rate Processing erforderlich, um die übertragenen Informationen im Empfänger wieder aufzutrennen und den verschiedenen Benutzern zuzuordnen. In dem einen der beiden erläuterten Extremfälle, nämlich bei einer maximalen Anzahl von Benutzern mit geringen Datenraten, muss somit im Hinblick auf die Durchführung des Chip Rate Processing ein maximaler Aufwand betrieben werden.

Der Aufwand für das Symbol Rate Processing ist im Wesentlichen abhängig von der vorhandenen Datenrate. Je größer die Datenrate ist, desto mehr Aufwand ist bei dem Symbol Rate Processing erforderlich, um die empfangenen Informationen zu dekodieren. In dem anderen der beiden Extremfälle, nämlich bei einer geringen Anzahl von Benutzern mit maximalen Datenraten, muss somit im Hinblick auf die Durchführung des Symbol Rate Processing ein maximaler Aufwand betrieben werden.

In der Figur ist ein Teil einer Basisstation 10 eines funkbetriebenen CDMA Telekommunkationssystems dargestellt. Insbesondere zeigt die Figur den Empfänger der Basisstation 10. Mit einem Pfeil 11 sind die von der Basisstation 10 empfangenen Informationen gekennzeichnet, bei denen es sich, wie bereits erwähnt, um Daten und/oder Sprache handeln kann.

Es wird an dieser Stelle betont, dass die nachfolgende Beschreibung der Basisstation 10 in entsprechender Weise auch auf eine Mobilstation des CDMA Telekommunikationssystems angewendet werden kann.

Zur Verarbeitung der empfangenen Informationen 11 weist die Basisstation 10 einen digitalen Signalprozessor 12 (DSP = Digital Signal Processor) auf. Anstelle des Signalprozessors 12 kann auch ein sonstiger Prozessor oder Mikroprozessor vorgesehen sein. Dem Signalprozessor 12 sind die empfangenen Informationen 11 zugeführt. Es wird darauf hingewiesen, dass anstelle eines einzigen DSPs auch zwei oder mehrere DSPs, insbesondere ein DSP-Feld oder eine DSP-Gruppe vorhanden sein kann.

Der Signalprozessor 12 ist derart programmiert, dass er das erwähnte Chip Rate Processing, wie auch das erwähnte Symbol Rate Processing ausführen kann. Diese Funktionen sind in der Figur durch die logischen Blöcke 13, 14 innerhalb des Signalprozessors 12 gekennzeichnet. Die Blöcke 13, 14 stellen damit Programmmodule dar, die die Betriebsweise des Signalprozessors 12 festlegen.

Vorzugsweise führt der Signalprozessor 12 das Chip Rate Processing 13 und das Symbol Rate Processing 14 vollständig aus. Es ist aber auch möglich, dass bestimmte Teile dieser Funktionen nicht von dem Signalprozessor 12 ausgeführt werden, sondern separat, z.B. durch zusätzliche Hardware in der Basisstation 10 durchgeführt werden.

Weiterhin ist der Signalprozessor 12 derart programmiert, dass er eine sogenannte Task Allocation (Kontrollfunktion, Zuordnung von Aufgaben) durchführen kann. Dabei handelt es sich um die Steuerung und Zuordnung der von dem Signalprozessor 12 auszuführenden Funktionen. Die Task Allocation ist in der Figur durch den weiteren logischen Block 15 innerhalb des Signalprozessors 12 gekennzeichnet. Auch bie diesem Block 15 handelt es sich somit um ein Programmmodul, das die Betriebsweise des Signalprozessors 12 definiert.

Die Task Allocation 15 ist dazu geeignet, den Signalprozessor 12 entweder das Chip Rate Processing 13 oder das Symbol Rate Processing durchführen zu lassen. Ebenfalls ist die Task Allocation 15 dazu vorgesehen, das Umschalten zwischen dem Chip Rate Processing und dem Symbol Processing durchzuführen und die hierzu gegebenenfalls erforderliche Weitergabe von Informationen zu steuern.

Damit die Task Allocation 15 in der Lage ist, die vorgenannten Aufgaben durchzuführen, ist der Signalprozessor 12 derart programmiert, dass nicht nur die Task Allocation 15 auf das Chip Rate Processing 13 und das Symbol Rate Processing 14 einwirken kann, sondern dass umgekehrt auch die Task Allocation 15 Rückmeldungen von dem Chip Rate Processing 13 und dem Symbol Rate Processing 14 erhält. Dies ist in der Figur mit dem bidirektionalen Pfeil 16 gekennzeichnet, mit dem das Chip Rate Processing 13, das Symbol Rate Processing 14 und die Task Allocation 15 miteinander gekoppelt sind.

Im Betrieb der Basisstation 10 wird folgendes Verfahren ausgeführt.

Der Signalprozessor 12 wird zuerst derart von der Task Allocation 15 gesteuert, dass das Chip Rate Processing 13 durchgeführt wird. Dies bedeutet, dass die empfangenen Informationen 11 dem Chip Rate Processing 13 unterzogen werden, wie dies in der Figur durch den an dem zugehörigen Block 13 endenden Pfeil 11 angedeutet ist.

Nachdem das Chip Rate Processing 13 durchgeführt ist, werden die empfangenen Informationen 11 an das Symbol Rate Processing 14 weitergegeben, was in der Figur mit Hilfe des Pfeils 17 angedeutet ist. Hierzu kann es erforderlich sein, dass der Signalprozessor 12 mit einem Speicher zur Zwischenspeicherung der Informationen 11 versehen ist. Da die Informationen 11 in der Form von aufeinanderfolgenden Frames (Rahmen) empfangen werden, muss der vorgenannte Speicher im Hinblick auf seine Größe zumindest dazu geeignet sein, einen derartigen Frame abzuspeichern.

Danach wird der Signalprozessor 12 derart von der Task Allocation 15 gesteuert, dass das Symbol Rate Processing 14 durchgeführt wird. Die empfangenen Informationen 11 werden also dem Symbol Rate Processing 14 unterzogen, wie dies in der Figur durch den an dem zugehörigen Block 14 endenden Pfeil 17 angedeutet ist.

Nach der Durchführung des Symbol Rate Processing 14 stehen dann am Ausgang des Signalprozessors 12 die nunmehr verarbeiteten Informationen zur Verfügung. Diese sind in der Figur durch einen Pfeil 18 gekennzeichnet. Bei diesen Informationen 18 handelt es sich um die Sprache und die Daten, die dabei jeweils dem zugehörigen Benutzer zugeordnet sind.

Bei dem vorstehend beschriebenen Verfahren führt der Signalprozessor 12 zuerst das Chip Rate Processing 13 und dann das Symbol Rate Processing 14 aus. Dabei besteht eine Voraussetzung dieses Verfahrens darin, dass der Signalprozessor 12 in der Lage ist, die eingangs genannten beiden Extremfälle zu verarbeiten. Der Signalprozessor 12 muss also bei maximaler Anzahl von Benutzern mit geringer Datenrate, wie auch bei geringer Anzahl von Benutzern mit maximaler Datenrate dazu geeignet und in der Lage sein, das erforderlich Chip Rate Processing und Symbol Rate Processing durchzuführen.

Ein entsprechendes Verfahren ist ebenfalls ausführbar, wenn nicht nur ein einziger DSP vorgesehen ist, sondern eine Mehrzahl von DSPs vorhanden sind. In diesem Fall müssen die Mehrzahl der DSPs in der Lage sein, die beiden genannten Extremfälle zu verarbeiten.

Dabei ist es zweckmäßig, wenn beim Chip Rate Processing alle DSPs immer nur einem Benutzer zugeordnet werden. Dies bedeutet, dass alle DSPs gleichzeitig die Informationen abarbeiten, die zu einem einzigen Benutzer gehören. Sind diese Informationen verarbeitet, so werden alle DSPs dem nächsten Benutzer zugeordnet, und so weiter.

Beim Symbol Rate Processing hingegen können immer die Informationen mehrerer Benutzer von einem DSP verarbeitet werden.

Ist insbesondere ein DSP-Feld oder eine DSP-Gruppe vorhanden, so ist auch ein alternatives Verfahren ausführbar. Dabei werden die DSPs des DSP-Felds oder der DSP-Gruppe auf das Chip Rate Processing und das Symbol Rate Processing verteilt. Dies bedeutet, dass ein Unterfeld oder eine Untergruppe der DSPs das Chip Rate Processing durchführt, während ein anderes Unterfeld oder eine andere Untergruppe der DSPs quasi-gleichzeitig das Symbol Rate Processing durchführt.

Bei diesem alternativen Verfahren müssen dann die DSPs des DSP-Felds oder der DSP-Gruppe in Abhängigkeit von der aktuellen Anzahl von Benutzern und der aktuellen Datenrate aufgeteilt werden. Dies bedeutet, dass die DSPs immer so verteilt werden müssen, dass bei jeder Anzahl von Benutzern und bei jeder Datenrate das Chip Rate Processing und das Symbol Rate Processing durchgeführt werden kann. Diese Aufteilung kann dabei von der Task Allocation ermittelt und dann entsprechend gesteuert werden.

## Patentansprüche

1. Basisstation (10) oder Mobilstation eines funkbetriebenen Telekommunikationssystems mit einem Empfänger zur Verarbeitung von empfangenen Informationen (11) und mit mindestens einem digitalen Prozessor, insbesondere einem digitalen Signalprozessor (12) zur Durchführung eines Symbol Rate Processing (14), **dadurch gekennzeichnet, dass** der Signalprozessor (12) dazu geeignet und vorgesehen ist, zumindest Teile eines Chip Rate Processing (13) ebenfalls durchzuführen.

2. Basisstation (10) oder Mobilstation nach Anspruch 1, **dadurch gekennzeichnet, dass** der Signalprozessor (12) dazu geeignet ist, eine Task Allocation (15) zur Steuerung des Chip Rate Processing (13) und des Symbol Rate Processing (14) durchzuführen.

3. Basisstation (10) oder Mobilstation nach einem der Ansprüche 1 oder 2, **dadurch gekennzeichnet, dass** der Signalprozessor (12) derart ausgebildet ist, dass zuerst das Chip Rate Processing (13) und dann das Symbol Rate Processing (14) durchführbar ist.

4. Basisstation oder Mobilstation nach einem der Ansprüche 1 bis 3, **dadurch gekennzeichnet, dass** ein Feld oder eine Gruppe von digitalen Signalprozessoren vorhanden ist.

5. Basisstation oder Mobilstation nach Anspruch 4, **dadurch gekennzeichnet, dass** das Chip Rate Processing und das Symbol Rate Processing auf Unterfelder oder Untergruppen von Signalprozessoren verteilbar ist.

6. Basisstation (10) oder Mobilstation nach einem der Ansprüche 1 bis 5, **dadurch gekennzeichnet, dass** mindestens ein Speicher vorhanden ist, der dazu geeignet und vorgesehen ist, die empfangenen Informationen (11) zwischenzuspeichern.

7. Basisstation (10) oder Mobilstation nach einem der Ansprüche 1 bis 6, **dadurch gekennzeichnet, dass** das Chip Rate Processing (13) ein Despreading der empfangenen Informationen (11) enthält.

8. Basisstation (10) oder Mobilstation nach einem der Ansprüche 1 bis 7, **dadurch gekennzeichnet, dass** das Symbol Rate Processing (15) ein Dekodieren der empfangenen Informationen (11) enthält.

9. Empfänger für eine Basisstation (10) oder eine Mobilstation eines funkbetriebenen Telekommunikationssystems zur Verarbeitung von empfangenen Informationen (11) mit mindestens einem digitalen Prozessor, insbesondere einem digitalen Signalprozessor (12) zur Durchführung eines Symbol Rate Processing (14), **dadurch gekennzeichnet, dass** der Signalprozessor (12) dazu geeignet und vorgesehen ist, zumindest Teile eines Chip Rate Processing (13) ebenfalls durchzuführen.

10. Funkbetriebenes Telekommunikationssystem, **dadurch gekennzeichnet, dass** eine Basisstation (10) oder eine Mobilstation nach einem der Ansprüche 1 bis 8 oder ein Empfänger nach Anspruch 9 vorhanden ist.

11. Telekommunikationssystem nach Anspruch 10, **dadurch gekennzeichnet, dass** es sich um ein Code Division Multiple Access (CDMA) Telekommunikationssystem handelt.

12. Verfahren zum Betreiben eines funkbetriebenen Telekommunikationssystems, bei dem von einer Basisstation (10) oder einer Mobilstation empfangene Informationen (11) mittels mindestens eines digitalen Prozessors, insbesondere eines digitalen Signalprozessors (12) einem Symbol Rate Processing (14) unterzogen werden, **dadurch gekennzeichnet, dass** von dem mindestens einen Signalprozessor (12) zumindest ein Teil des Chip Rate Processing (13) ebenfalls durchgeführt wird.

13. Verfahren nach Anspruch 12, **dadurch gekennzeichnet, dass** zuerst das Chip Rate Processing (13) und dann das Symbol Rate Processing (14) durchgeführt wird.

14. Verfahren nach Anspruch 12 oder 13, **dadurch gekennzeichnet, dass** von dem mindestens einen Signalprozessor (12) eine Task Allocation (15) zur Steuerung des Chip Rate Processing (13) und des Symbol Rate Processing (14) durchgeführt wird.

15. Verfahren nach einem der Ansprüche 12 bis 14, wobei ein Feld oder eine Gruppe von digitalen Signalprozessoren vorhanden ist, **dadurch gekennzeichnet, dass** das Chip Rate Processing und das Symbol Rate Processing auf Unterfelder oder Untergruppen von Signalprozessoren verteilt wird.

16. Verfahren nach Anspruch 15, **dadurch gekennzeichnet, dass** die Aufteilung des Feldes oder der Gruppe von Signalprozessoren auf das Chip Rate Processing und das Symbol Rate Processing von der Task Allocation durchgeführt wird.
